# EUROPÄISCHE PATENTSCHRIFT

(11) **EP 2 641 286 B1**
(45) Veröffentlichungstag und Bekanntmachung des Hinweises auf die Patenterteilung: **07.01.2015**
(21) Anmeldenummer: 11782552.1
(22) Anmeldetag: 08.11.2011
(51) Int. Cl.: H01M 2/14, H01M 4/04, H01M 10/04, H01M 4/88, B08B 1/00, B08B 1/02, B08B 1/04

(54) **VERFAHREN ZUR REINIGUNG VON BLATT- ODER PLATTENFÖRMIGEN ELEKTRODEN UND/ODER SEPARATOREN**
METHOD FOR CLEANING SHEET- OR PLATE-LIKE ELECTRODES AND/OR SEPARATORS
PROCÉDÉDE NETTOYAGE D'ELECTRODES ET/OU DES SÉPARATEURS EN FORME DE LAME OU DE PLAQUE

(30) Priorität: 17.11.2010 DE 102010051668
(43) Veröffentlichungstag der Anmeldung: 25.09.2013
(73) Patentinhaber: Li-Tec Battery GmbH, 01917 Kamenz (DE)
(72) Erfinder: HOHENTHANNER, Claus-Rupert, 63457 Hanau (DE); LEGNER, Steffen, 73479 Ellwangen (DE)
(74) Vertreter: Wallinger, Michael
(86) Internationale Anmeldenummer: PCT/EP2011/005610
(87) Internationale Veröffentlichungsnummer: WO 2012/065695

(56) Entgegenhaltungen:
- EP-A1- 1 046 370
- EP-A2- 1 802 178
- CH-A- 437 678
- DE-A1- 3 506 556
- DE-A1- 10 354 168
- DE-A1-102004 016 961
- GB-A- 901 579
- JP-B1- 4 485 598
- US-A- 5 007 467
- US-A- 5 538 562
- US-A- 5 842 916

## Beschreibung

Die vorliegende Erfindung betrifft ein Verfahren zur Reinigung von blatt- oder plattenförmigen Elektroden und/oder Separatoren zum Aufbau eines elektrochemischen Energiespeichers oder von Teilen solcher Elektroden oder Separatoren.

Als elektrochemische Energiespeicher sind Batterien (Primärspeicher) und Akkumulatoren (Sekundärspeicher) bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und so gespeichert wird und in denen bei Anschließen eines elektrischen Verbrauchers chemische Energie in einer elektrochemischen Entladereaktion in elektrische Energie umgewandelt wird. Dabei werden Primärspeicher in der Regel nur ein Mal aufgeladen und nach ihrer Entladung entsorgt, während Sekundärspeicher mehrere (von einigen 100 bis über 10.000) Zyklen von Aufladung und Entladung erlauben. In diesem Zusammenhang ist anzumerken, dass insbesondere im Kraftfahrzeugbereich auch Akkumulatoren als Batterien bezeichnet werden.

Unter einem "elektrochemischen Energiespeicher" soll vorliegend jede Art von Energiespeicher verstanden werden, dem elektrische Energie entnommen werden kann, wobei im Innern des Energiespeichers eine elektrochemische

Aus DE 3 506 556 A1 ist ein Verfahren zum Reinigen von flächigen Kleinteilen, insbesondere Münzen bekannt.

Reaktion abläuft. Der Begriff umfasst Energiespeicher aller Art, insbesondere Primärbatterien und Sekundärbatterien. Die elektrochemische Energiespeichervorrichtung weist wenigstens eine elektrochemische Zelle, bevorzugt mehrere elektrochemische Zellen auf. Die mehreren elektrochemischen Zellen können zum Speichern einer größeren Ladungsmenge parallel geschaltet sein oder zur Erzielung einer gewünschten Betriebsspannung in Serie geschaltet sein oder eine Kombination aus Parallel- und Serienschaltung bilden.

Unter einer "elektrochemischen Zelle" ist dabei eine Vorrichtung zu verstehen, welche der Abgabe elektrischer Energie dient, wobei die Energie in chemischer Form gespeichert wird. Im Fall von wiederaufladbaren Sekundärbatterien ist die Zelle auch ausgebildet, um elektrische Energie aufzunehmen, in chemische Energie umzuwandeln und abzuspeichern. Die Gestalt (d.h. insbesondere die Größe und die Geometrie) einer elektrochemischen Zelle kann abhängig von dem verfügbaren Raum gewählt werden. Bevorzugt ist die elektrochemische Zelle im Wesentlichen prismatisch oder zylindrisch ausgebildet. Die vorliegende Erfindung ist insbesondere für elektrochemische Zellen in vorteilhafter Weise einsetzbar, die als Pouch-Zellen oder Coffeebag-Zellen bezeichnet werden, ohne dass die elektrochemische Zelle der vorliegenden Erfindung auf diese Anwendung beschränkt sein soll.

Eine solche elektrochemische Zelle weist üblicherweise einen Elektrodenstapel auf, der von einer Umhüllung zumindest teilweise umschlossen ist. In diesem Zusammenhang soll unter einem "Elektrodenstapel" eine Anordnung aus wenigstens zwei Elektroden und einem dazwischen angeordneten Elektrolyten verstanden werden. Der Elektrolyt kann teilweise von einem Separator aufgenommen sein, wobei der Separator dann die Elektroden trennt. Bevorzugt weist der Elektrodenstapel mehrere Schichten von Elektroden und Separatoren auf, wobei die Elektroden gleicher Polarität jeweils vorzugsweise elektrisch miteinander verbunden, insbesondere parallel geschaltet sind. Die Elektroden sind zum Beispiel plattenförmig oder folienartig ausgebildet und sind bevorzugt im Wesentlichen parallel zueinander angeordnet (prismatische Energiespeicherzellen). Der Elektrodenstapel kann auch gewickelt sein und eine im Wesentlichen zylindrische Gestalt besitzen (zylindrische Energiespeicherzellen). Der Begriff "Elektrodenstapel" soll auch derartige Elektrodenwickel beinhalten. Der Elektrodenstapel kann Lithium oder ein anderes Alkalimetall auch in ionischer Form aufweisen.

Die Elektroden und die Separatoren werden in einer sehr großen Anzahl benötigt, weshalb Bedarf an hochqualitativen, effektiven und kostengünstigen Fertigungsverfahren besteht. Bei der Fertigung der Elektroden und Separatoren ist zu beachten, dass diese Komponenten vor dem Zusammenbau der Elektrodenstapel bzw. Zellen gereinigt werden. In diesem Zusammenhang ist auch zu berücksichtigen, dass diese Komponenten üblicherweise aus einem Bandmaterial durch z. B. Schneiden oder Sägen hergestellt werden, wobei Staub entsteht, der zum Teil an den Komponenten haften bleibt.

Es ist deshalb eine Aufgabe der vorliegenden Erfindung ein verbessertes Verfahren zur Reinigung von blatt- oder plattenförmigen Elektroden und/oder Separatoren zu scharfen.

Diese Aufgabe wird durch ein Verfahren nach Anspruch 1 gelöst. Vorteilhafte Ausgestaltungen und Weiterbildungen sind Gegenstand der abhängigen Ansprüche.

Das erfindungsgemäße Verfahren dient zur Reinigung von blatt- oder plattenförmigen Elektroden und/oder Separatoren zum Aufbau eines elektrochemischen Energiespeichers oder von Teilen solcher Elektroden oder Separatoren, wobei die blatt- oder plattenförmigen Elektroden und/oder Separatoren, welche nachfolgend als Objekte bereichnet werden, eine erste Objektseite und eine der ersten Objektseite gegenüberliegende zweite Objektseite und wenigstens eine die erste und die zweite Objektseite verbindende Seitenfläche aufweisen. Bei dem Verfahren wird zunächst wenigstens ein Objekt auf einem ersten Transportband, vorzugsweise einem ersten Vakuumband derart angeordnet, dass die zweite Objektseite dem ersten Transportband zugewandt ist (Schritt S1). Dann wird das Objekt mit dem ersten Transportband zu einer ersten Reinigungsvorrichtung, vorzugsweise einer ersten Reinigungsvorrichtung bewegt (Schritt S2), mittels welcher dann die erste Objektseite und vorzugsweise wenigstens eine Seitenfläche des Objekts auf dem ersten Transportband gereinigt werden (Schritt S3). Anschließend wird das Objekt von dem ersten Transportband auf ein zweites Transportband, vorzugsweise auf ein zweites Vakuumband derart übergeben, dass die erste Objektseite dem zweiten Transportband zugewandt ist (Schritt S4). Das zweite Transportband bewegt dann das Objekt zu einer zweiten Reinigungsvorrichtung (Schritt S5), mittels welcher die zweite Objektseite und vorzugsweise wenigstens eine Seitenfläche des Objekts auf dem zweiten Transportband gereinigt werden (Schritt S6).

Mit diesem Verfahren können die Objekte sehr effektiv und gründlich an ihren beiden Objektseiten und an den Seitenflächen gereinigt werden. Dieses Verfahren ist zudem für kontinuierliche Reinigungsverfahren in durchgehenden Produktionslinien geeignet. Das Verfahren ist auch zur Reinigung einer sehr großen Anzahl von Objekten geeignet.

Das erfindungsgemäße Verfahren ist in vorteilhafter Weise auch zur Reinigung von Objekten mit geringer Formsteifigkeit und/oder mit geringen Dickenmaßen einsetzbar. Damit bietet es besondere Vorteile zur Reinigung von Elektroden oder Separatoren zum Aufbau elektrochemischer Energiespeicher.

Unter einem "blatt- oder plattenförmigen Objekt" soll im Rahmen dieser Erfindung ein im Wesentlichen flächiger Gegenstand, vorzugsweise ein dünner flächiger Gegenstand, verstanden werden. Ein flächiger Gegenstand ist dabei ein Gegenstand, dessen Abmessungen in einer Richtung senkrecht zu seiner Fläche (auch als Dickenrichtung bezeichnet) wesentlich geringer sind als die Abmessungen der größten Strecken, die vollständig innerhalb der Fläche liegen.

Die erste und die zweite Objektseite bilden jeweils die Fläche eines solchen flächigen Gegenstandes, wobei die erste und die zweite Objektseite vorzugsweise im Wesentlichen parallel zueinander verlaufen, ohne dass die Erfindung auf diese Ausführungsvariante beschränkt sein soll. Die wenigstens eine Seitenfläche, welche die erste und die zweite Objektseite miteinander verbindet, bestimmt das Dickenmaß des flächigen Gegenstandes. Die Seitenfläche verläuft dabei vorzugsweise im Wesentlichen senkrecht zur ersten und zur zweiten Objektseite, ohne dass die Erfindung auf diese Ausführungsvariante beschränkt sein soll. Die ersten und zweiten Objektseiten können grundsätzlich beliebige Formen annehmen, vorzugsweise sind die erste und die zweite Objektseite jeweils im Wesentlichen rechteckig gewählt; in diesem Fall weist das Objekt insgesamt vier Seitenflächen auf, wobei benachbarte Seitenflächen im Wesentlichen rechtwinklig zueinander angeordnet sind. Das Dickenmaß der Objekte ist grundsätzlich beliebig, es reicht vorzugsweise von Folienstärke bis hin zu Plattenstärke. Die erste Objektseite des Objekts kann auch als Objektoberseite und die zweite Objektseite des Objekts kann auch als Objektunterseite bezeichnet werden, oder umgekehrt.

Im Sinne der Erfindung ist unter einem Transportband ein Band zum Transport der Objekte zu verstehen, mit dem die Objekte transportiert und vorzugsweise durch Unterdruck, mechanisch, elektrostatisch oder magnetisch anhaften. Bevorzugt ist das Transportband ein Vakuumband, an dem die Objekte durch Unterdruck anhaften. Übliche Komponenten eines typischen Vakuumbandes sind ein Förderband, wenigstens ein Vakuumkanal, ein Fördergurt und wenigstens eine Vakuumpumpe.

Im Sinne der Erfindung ist unter einer "Reinigungsvorrichtung" eine Vorrichtung zu verstehen, die eine Funktionseinheit aufweist, die zur Reinigung der Oberflächen der Objekte, d.h. der jeweils frei liegenden ersten oder zweiten Objektseite und wenigstens einer Seitenfläche des Objekts ausgestaltet und angeordnet ist. Bei dem Reinigungsvorgang durch eine solche Reinigungsvorrichtung sollen insbesondere an dem Objekt anhaftende Partikel gelöst und entfernt werden. Die Reinigungsvorrichtung verwendet für den Reinigungsvorgang vorzugsweise keine elektrisch leitenden Teile, um zu verhindern, dass Bürstenpartikel zum Beispiel in die elektrochemische Energiespeicherzelle geraten und dort einen Kurzschluss verursachen können. Bei der ersten und der zweiten Reinigungsvorrichtung handelt es sich vorzugsweise um zwei verschiedene, voneinander getrennte Vorrichtungen, es kann sich alternativ aber auch um ein und dieselbe Vorrichtung handeln.

In einer vorteilhaften Ausgestaltung der Erfindung wird das Objekt derart auf dem ersten und/oder dem zweiten Transportband angeordnet, dass wenigstens eine Seitenfläche des Objekts in einem von 0 Grad und von 90 Grad verschiedenen Winkel, vorzugsweise in einem Winkel im Bereich von etwa 30 bis 45 Grad, relativ zur Laufrichtung des ersten bzw. zweiten Transportbandes ausgerichtet ist. Im Fall eines Objekts mit im Wesentlichen rechteckigen ersten und zweiten Objektseiten sind vorzugsweise alle vier Seitenflächen des Objekts relativ zur Laufrichtung des ersten bzw. zweiten Förderbandes jeweils in einem Winkel von etwa 45 Grad ausgerichtet. Durch diese Maßnahme können die Seitenflächen des Objekts durch die erste bzw. die zweite Reinigungsvorrichtung, insbesondere auch bei einem kontinuierlichen Reinigungsverfahren, besser und gründlicher gereinigt werden.

In einer vorteilhaften Ausgestaltung der Erfindung wird das Objekt in Schritt S3 und/oder in Schritt S6 in einem Durchlaufverfahren gereinigt. Hierdurch kann die Dauer des Reinigungsverfahrens verkürzt werden.

In einer vorteilhaften Ausgestaltung der Erfindung wird das Objekt in Schritt S3 und/oder in Schritt S6 auf dem ersten bzw. zweiten Transportband mit wenigstens einer sich drehenden Bürste zum Lösen anhaftender Partikel abgebürstet. Ein Vorteil dieser Ausgestaltung liegt darin, dass die Reinigung des Objekts schnell und gründlich durchgeführt werden kann.

In einer vorteilhaften Ausgestaltung der Erfindung werden in Schritt S3 und/oder in Schritt S6 Partikel von dem Objekt auf dem ersten bzw. zweiten Transportband mittels Ultraschallpulsen gelöst. Ein Vorteil dieser Ausgestaltung liegt darin, dass die Reinigung des Objekts besonders schonend durchgeführt und Probleme mit elektrostatischer Aufladung verringert werden können.

In einer vorteilhaften Ausgestaltung der Erfindung werden in Schritt S3 und/oder in Schritt S6 die von dem Objekt gelösten Partikel mittels eines Luftstroms fortgeführt. Ein Vorteil dieser Ausgestaltung liegt in der schonenden und gründlichen Reinigung des Objekts.

In einer vorteilhaften Ausgestaltung der Erfindung wird das Objekt auf dem ersten Transportband und/oder auf dem zweiten Transportband elektrostatisch entladen. Die elektrostatische Entladung kann vor, während und/oder nach der Reinigung auf dem jeweiligen Transportband erfolgen. Ein Vorteil dieser Ausgestaltung liegt darin, dass Schäden an dem Objekt und/oder einer mit dem Objekt aufzubauenden Einheit durch elektrostatische Aufladungen vermieden werden können.

In einer vorteilhaften Ausgestaltung der Erfindung wird das Objekt nach dem Schritt S6 in einem Schritt S7 von dem zweiten Transportband auf ein drittes Transportband übergeben, wobei die zweite Objektseite dem dritten Transportband zugewandt ist. Mit Hilfe des dritten Transportbandes kann das Objekt vorzugsweise einem weiteren Reinigungsverfahren zugeführt werden oder weiter transportiert werden.

In einer vorteilhaften Ausgestaltung der Erfindung wird das Objekt in Schritt S4 und/oder in Schritt S7 mit gleichbleibender Ausrichtung relativ zur Laufrichtung des ersten bzw. des zweiten Transportbandes zwischen den beiden Transportbändern übergeben. Ein Vorteil dieser Ausgestaltung liegt in der einfachen Prozessführung des Reinigungsverfahrens.

Das nicht erfindungsgemäße System dient zur Reinigung von blatt- oder platten-förmigen Elektroden und/oder Separatoren zum Aufbau eines elektrochemischen Energiespeichers oder von Teilen solcher Elektroden oder Separatoren, welche nachfolgend als Objekte bereichnet werden, wobei die blatt- oder plattenförmigen Objekte eine erste Objektseite und eine der ersten Objektseite gegenüberliegende zweite Objektseite und wenigstens eine die erste und die zweite Objektseite verbindende Seitenfläche aufweisen. Das Reinigungssystem weist auf: ein erstes Transportband zum Bewegen des Objekts zu einer ersten Reinigungsvorrichtung, wobei das erste Transportband derart angeordnet und ausgestaltet ist, dass es das Objekt so aufnimmt, dass die zweite Objektseite dem ersten Transportband zugewandt ist; die erste Reinigungsvorrichtung, welche derart angeordnet und ausgestaltet ist, dass sie die erste Objektseite und wenigstens eine Seitenfläche des Objekts auf dem ersten Transportband reinigen kann; ein zweites Transportband zum Übernehmen des Objekts von dem ersten Transportband und Bewegen des Objekts zu einer zweiten Reinigungsvorrichtung, wobei das zweite Transportband derart angeordnet und ausgestaltet ist, dass es das Objekt so aufnimmt, dass die erste Objektseite dem zweiten Transportband zugewandt ist; und die zweite Reinigungsvorrichtung, welche derart angeordnet und ausgestaltet ist, dass sie die zweite Objektseite und wenigstens eine Seitenfläche des Objekts auf dem zweiten Transportband reinigen kann.

In einer vorteilhaften Ausgestaltung weisen die erste und/oder die zweite Reinigungsvorrichtung jeweils wenigstens eine sich drehende Bürste auf.

Bei dieser Ausgestaltung weisen die erste und/oder die zweite Reinigungsvorrichtung vorzugsweise jeweils wenigstens eine Bürste auf, die aus einer Gruppe ausgewählt ist, die konische Bürsten, schneckenförmig verlaufende Bürsten, Walzenbürsten, Rundbürsten, Topfbürsten und Kegelbürsten enthält.

Bei dieser Ausgestaltung weisen die erste und/oder die zweite Reinigungsvorrichtung vorzugsweise jeweils mindestens zwei Bürsten auf, die parallel oder im Winkel zueinander angeordnet sind und parallel oder in einem Winkel zur Laufrichtung des ersten bzw. des zweiten Transportbandes ausgerichtet sind.

In einer vorteilhaften Ausgestaltung weisen die erste und/oder die zweite Reinigungsvorrichtung wenigstens eine Ultraschalleinheit zur Erzeugung von auf das Objekt gerichteten Ultraschallpulsen auf.

In einer vorteilhaften Ausgestaltung weisen die erste und/oder die zweite Reinigungsvorrichtung eine Luftstromeinheit zur Erzeugung eines Luftstroms zur Fortführung der von dem Objekt gelösten Partikel auf.

In einer vorteilhaften Ausgestaltung ist eine Sogrichtung des ersten Transportbandes entgegengesetzt zu einer Sogrichtung des zweiten Transportbandes gewählt. Ein Vorteil dieser Ausgestaltung ist die Möglichkeit einer kompakten Bauweise des Reinigungssystems.

In einer vorteilhaften Ausgestaltung sind das erste Transportband und das zweite Transportband in ihrer Laufrichtung einander überlappend angeordnet, wobei vorzugsweise das Maß der Überlappung zumindest der Größe eines Objekts in der Laufrichtung des ersten bzw. zweiten Transportbandes entspricht. Ein Vorteil dieser Ausgestaltung ist die Möglichkeit einer kompakten Bauweise des Reinigungssystems.

In einer vorteilhaften Ausgestaltung sind eine erste elektrostatische Entladevorrichtung, die an dem ersten Transportband und/oder der ersten Reinigungsvorrichtung angeordnet ist, und/oder eine zweite elektrostatische Entladevorrichtung, die an dem zweiten Transportband und/oder der zweiten Reinigungsvorrichtung angeordnet ist, vorgesehen.

In einer vorteilhaften Ausgestaltung weisen diese erste und/oder zweite elektrostatische Entladevorrichtungen eine Entladefunktionseinheit auf, die aus einer Gruppe ausgewählt ist, die eine Metallwalze, eine Walze mit leitender Oberfläche, einen Entladestab, einen Vorhang mit elektrisch leitenden Bestandteilen und möglicherweise weitere Entladefunktionseinheiten enthält.

In einer vorteilhaften Ausgestaltung ist wenigstens ein drittes Transportband zum Übernehmen des Objekts von dem zweiten Transportband vorgesehen.

Weitere Vorteile, Merkmale und Anwendungsmöglichkeiten der vorliegenden Erfindung ergeben sich aus der nachfolgenden Beschreibung im Zusammenhang mit den Zeichnungen. Es zeigen:
- Fig. 1: eine Querschnittsdarstellung eines Reinigungssystems gemäß einem bevorzugten Ausführungsbeispiel;
- Fig. 2: eine schematische Draufsicht des in Fig. 1 gezeigten Reinigungssystems;
- Fig. 3: ein Flussdiagramm eines Reinigungsverfahrens gemäß der vorliegenden Erfindung;
- Fig. 4a: eine schematische Darstellung zur Anordnung der Reinigungsvorrichtung in Bezug auf die Laufrichtung und Anordnung der Elektroden nach einem ersten Ausführungsbeispiel;
- Fig. 4b: eine schematische Darstellung zur Anordnung der Reinigungsvorrichtung in Bezug auf die Laufrichtung und Anordnung der Elektroden nach einem zweiten Ausführungsbeispiel;
- Fig. 4c: eine schematische Darstellung zur Anordnung der Reinigungsvorrichtung in Bezug auf die Laufrichtung und Anordnung der Elektroden nach einem dritten Ausführungsbeispiel;
- Fig. 4d: eine schematische Darstellung zur Anordnung der Reinigungsvorrichtung in Bezug auf die Laufrichtung und Anordnung der Elektroden nach einem vierten Ausführungsbeispiel;
- Fig. 4e: eine schematische Darstellung zur Anordnung der Reinigungsvorrichtung in Bezug auf die Laufrichtung und Anordnung der Elektroden nach einem fünften Ausführungsbeispiel;
- Fig. 4f: eine schematische Darstellung zur Anordnung der Reinigungsvorrichtung in Bezug auf die Laufrichtung und Anordnung der Elektroden nach einem sechsten Ausführungsbeispiel;
- Fig. 4g: eine schematische Darstellung zur Anordnung der Reinigungsvorrichtung in Bezug auf die Laufrichtung und Anordnung der Elektroden nach einem siebten Ausführungsbeispiel;
- Fig. 4h: eine schematische Darstellung zur Anordnung der Reinigungsvorrichtung in Bezug auf die Laufrichtung und Anordnung der Elektroden nach einem achten Ausführungsbeispiel;
- Fig. 4i: eine schematische Darstellung zur Anordnung der Reinigungsvorrichtung in Bezug auf die Laufrichtung und Anordnung der Elektroden nach einem neunten Ausführungsbeispiel;
- Fig. 4j: eine schematische Darstellung zur Anordnung der Reinigungsvorrichtung in Bezug auf die Laufrichtung und Anordnung der Elektroden nach einem zehnten Ausführungsbeispiel;
- Fig. 4k: eine schematische Querschnittsdarstellung zur Anordnung der Reinigungsvorrichtung in Bezug auf die Laufrichtung und Anordnung der Elektroden nach einem elften Ausführungsbeispiel;
- Fig. 4l: eine schematische Querschnittsdarstellung zur Anordnung der Reinigungsvorrichtung in Bezug auf die Laufrichtung und Anordnung der Elektroden nach einem zwölften Ausführungsbeispiel und
- Fig. 4m: eine schematische Querschnittsdarstellung zur Anordnung der Reinigungsvorrichtung in Bezug auf die Laufrichtung und Anordnung der Elektroden nach einem dreizehnten Ausführungsbeispiel.

Die vorliegende Erfindung wird nachfolgend am Beispiel der Reinigung von Elektroden für einen elektrochemischen Energiespeicher beschrieben.

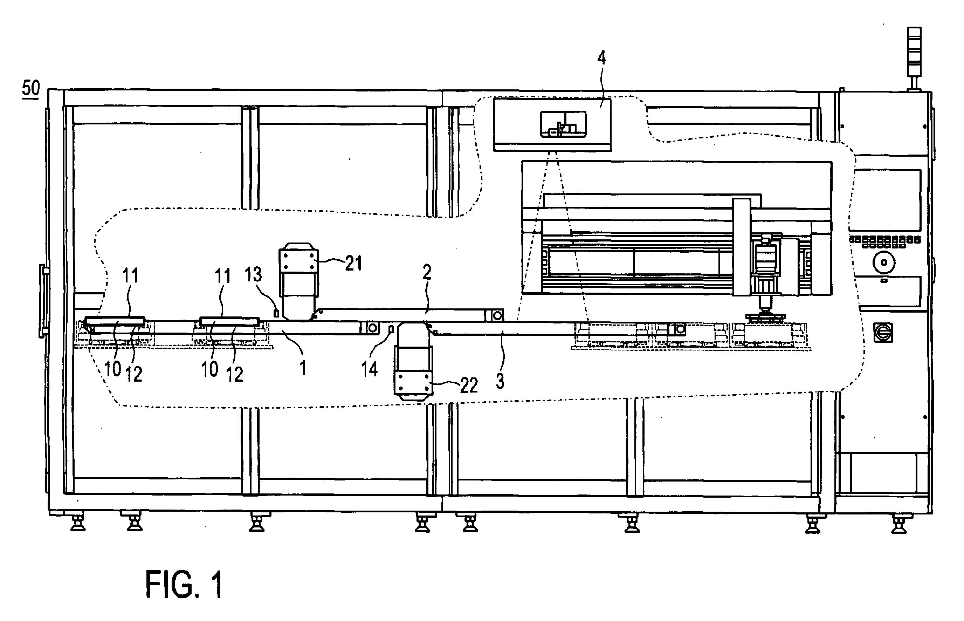

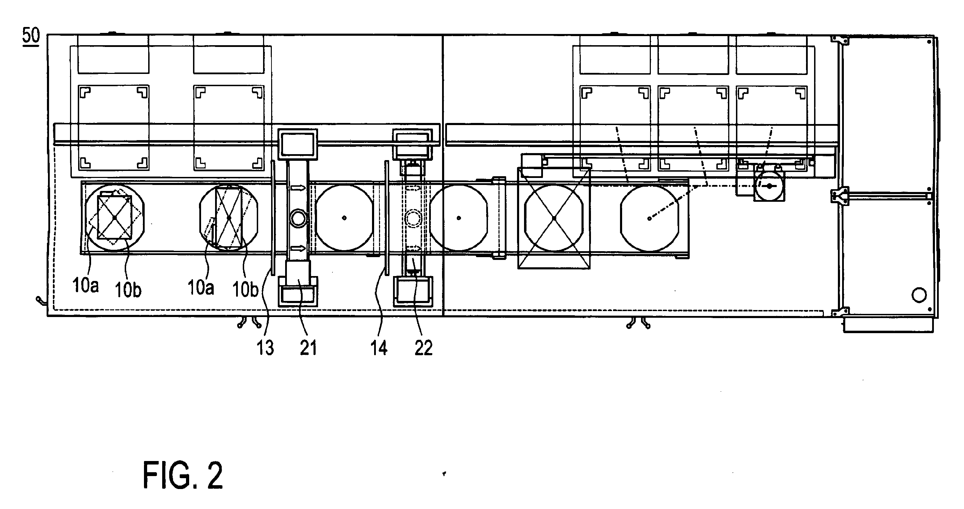

Fig. 1 zeigt eine schematische Darstellung eines Reinigungssystems 50, und Fig. 2 zeigt eine schematische Draufsicht auf das Reinigungssystem 50. Das Reinigungssystem 50 weist für Elektroden 10 mit einer Oberseite (erste Objektseite) 11 und einer Unterseite (zweite Objektseite) 12 ein erstes Transportband 1, eine an diesem ersten Transportband 1 angeordnete erste Reinigungsvorrichtung 21, eine an dem ersten Transportband 1 in Laufrichtung vor der ersten Reinigungsvorrichtung 21 angeordnete erste Entladevorrichtung 13, ein zweites Transportband 2, eine an diesem zweiten Transportband 2 angeordnete zweite Reinigungsvorrichtung 22, eine an dem zweiten Transportband 2 in Laufrichtung vor der zweiten Reinigungsvorrichtung 22 angeordnete zweite Entladevorrichtung 14 und ein drittes Transportband 3 zum Fortführen der Elektroden 10 auf.

Die Elektroden 10 werden auf dem ersten Transportband 1 mit ihrer Unterseite 12 in Richtung zum Transportband 1 angeordnet. Wie in Fig. 1 dargestellt, sind das erste und das zweite Transportband 1, 2 in vorteilhafter Weise so angeordnet, dass die Sogrichtung des ersten Transportbandes 1 entgegengesetzt zur Sogrichtung des zweiten Transportbandes 2 gewählt ist und dass das erste und das zweite Transportband 1, 2 in ihrer Laufrichtung einander überlappend angeordnet sind. Das Maß der Überlappung kann vorzugsweise dabei zumindest der Größe einer Elektrode 10 in der Laufrichtung des ersten bzw. zweiten Transportbandes 1, 2 entsprechen. Mit dieser Konfiguration des ersten und des zweiten Transportbandes 1, 2 können die Elektroden 10 so von dem ersten Transportband 1 auf das zweite Transportband 2 übergeben werden, dass die Elektroden 10 mit ihrer Oberseite 11 in Richtung zum zweiten Transportband 2 angeordnet sind, ohne dass die Elektroden 10 bei dieser Übergabe gedreht werden müssen. Das dritte Transportband 3 schließt sich in einer ähnlichen Weise an das zweite Transportband 2 an.

Zur besseren Darstellbarkeit sind die Elektroden 10 in Fig. 1 und 2 nicht maßstabsgetreu und nicht in der Ebene zwischen den Vakuumbändern 1, 3 einerseits und dem Transportband 2 andererseits gezeichnet.

Die erste Reinigungsvorrichtung 21 am ersten Transportband 1 und die zweite Reinigungsvorrichtung 22 am zweiten Transportband 2 können jeweils wenigstens eine Bürste aufweisen, die vorzugsweise aus einer Gruppe ausgewählt ist, die eine konische Bürste, eine schneckenförmig verlaufende Bürste, eine Walzenbürste, eine Rundbürste, eine Topfbürste und eine Kegelbürste enthält. Außerdem können die erste und die zweite Reinigungsvorrichtung 21, 22 jeweils mindestens zwei Bürsten aufweisen, die parallel oder im Winkel zueinander angeordnet sind und parallel oder in einem Winkel zur Laufrichtung des ersten bzw. des zweiten Transportbandes ausgerichtet sind.

Ferner weisen die erste und die zweite Reinigungsvorrichtung 21, 22 jeweils eine Luftstromeinheit auf, die einen Luftstrom erzeugt, der die von der Elektrode 10 abgebürsteten Partikel fortführt.

Weiterhin können auch die beiden Reinigungsvorrichtungen 21, 22 selbst mit Entladeeinheiten zur Verringerung der elektrostatischen Ladung der jeweiligen Bürsten während des Reinigungsvorganges der Elektroden 10 versehen sein.

Ferner kann das Reinigungssystem 50 eine Überwachungseinheit 4 zur Überwachung und vorzugsweise optischen Überprüfung der gereinigten Elektroden 10 auf dem dritten Transportband 3 aufweisen.

Wie in Fig. 2 angedeutet, werden die Elektroden 10 so auf dem ersten Transportband 1 und folglich auch auf dem zweiten Transportband 2 angeordnet, dass ihre Seitenflächen schräg zur Laufrichtung der Vakuumbänder 1, 2 verlaufen, d.h. in einem von 0 Grad und von 90 Grad verschiedenen Winkel relativ zur Laufrichtung der Vakuumbänder ausgerichtet sind. Vorzugsweise liegt dieser Winkel im Bereich zwischen etwa 30 und 45 Grad. Auf diese Weise können die Seitenflächen der Elektroden 10 durch die Bürsten der ersten und zweiten Reinigungsvorrichtung 21, 22 besser und gründlicher gereinigt werden.

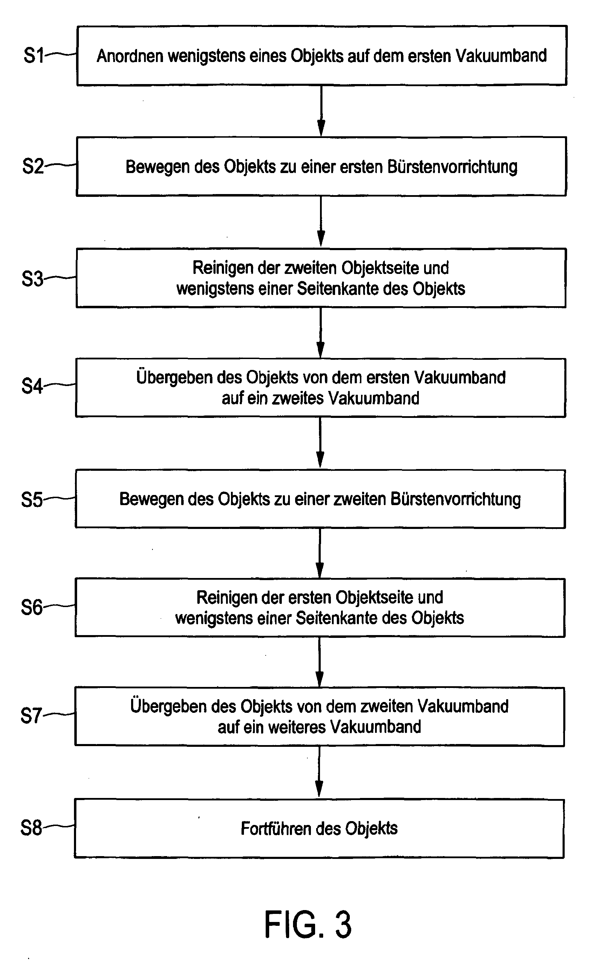

Anhand des Flussdiagramms von Fig. 3 werden nun die erfindungsgemäßen Verfahrensschritte zur Reinigung der Elektroden 10 mit dem oben beschriebenen Reinigungssystem 50 nochmals erläutert.

In einem Schritt S1 werden zunächst die Elektroden 10 auf dem ersten Transportband 1 angeordnet. In einem Schritt S2 werden die Elektroden 10 dann mit dem ersten Transportband 1 zur ersten Reinigungsvorrichtung 21 bewegt. Im Bereich der ersten Reinigungsvorrichtung 21 werden die Elektroden 10 dabei mittels der ersten Entladevorrichtung 13 elektrostatisch entladen.

In einem Schritt S3 werden die Elektroden 10 auf dem ersten Transportband 1 mittels der ersten Reinigungsvorrichtung 21 gereinigt. Bei diesem Schritt S3 können die Elektroden 10 auf dem ersten Transportband 1 mit wenigstens einer sich drehenden Bürste abgebürstet werden. Alternativ oder zusätzlich können die Partikel an den Elektroden auch durch ein Luftmesser oder durch Ultraschallpulse abgelöst werden. Weiter werden die abgelösten Partikel in der ersten Reinigungsvorrichtung 21 durch einen Luftstrom fortgeführt.

In einem Schritt S4 werden die Elektroden 10 nun von dem ersten Transportband 1 auf das zweite Transportband 2 übergeben. Durch den Überlapp der beiden Vakuumbänder 1, 2 und deren gegenseitige Ausrichtung mit entgegengesetzten Sogwirkungen werden die Elektroden 10 mit ihrer Oberseite 11 zum zweiten Transportband 2 hin angeordnet.

Mit Hilfe des zweiten Transportbandes 2 werden die Elektroden 10 dann in einem Schritt S5 zur zweiten Reinigungsvorrichtung 22 bewegt. Im Bereich dieser zweiten Reinigungsvorrichtung 22 werden die Elektroden 10 auf dem zweiten Transportband 2 vorzugsweise mittels der zweiten Entladevorrichtung 14 elektrostatisch entladen.

In einem Schritt S6 werden die Elektroden 10 auf dem zweiten Transportband 2 dann in der zweiten Reinigungsvorrichtung 22 gereinigt. Bei diesem Schritt S6 können die Elektroden 10 auf dem zweiten Transportband 2 mit wenigstens einer sich drehenden Bürste abgebürstet werden. Alternativ oder zusätzlich können die Partikel an den Elektroden 10 auch durch ein Luftmesser oder durch Ultraschallpulse abgelöst werden. Weiter werden die abgelösten Partikel in der zweiten Reinigungsvorrichtung 22 durch einen Luftstrom fortgeführt.

In einem Schritt S7 werden die Elektroden 10 anschließend von dem zweiten Transportband 2 auf das dritte Transportband 3 übergeben. Diese Übergabe erfolgt in umgekehrter Weise zur Übergabe zwischen dem ersten und dem zweiten Transportband 1, 2. In einem Schritt S8 werden die Elektroden 10 schließlich auf dem Transportband 3 fortgeführt, wobei eine Überprüfung der gereinigten Elektroden 10 durchgeführt werden kann.

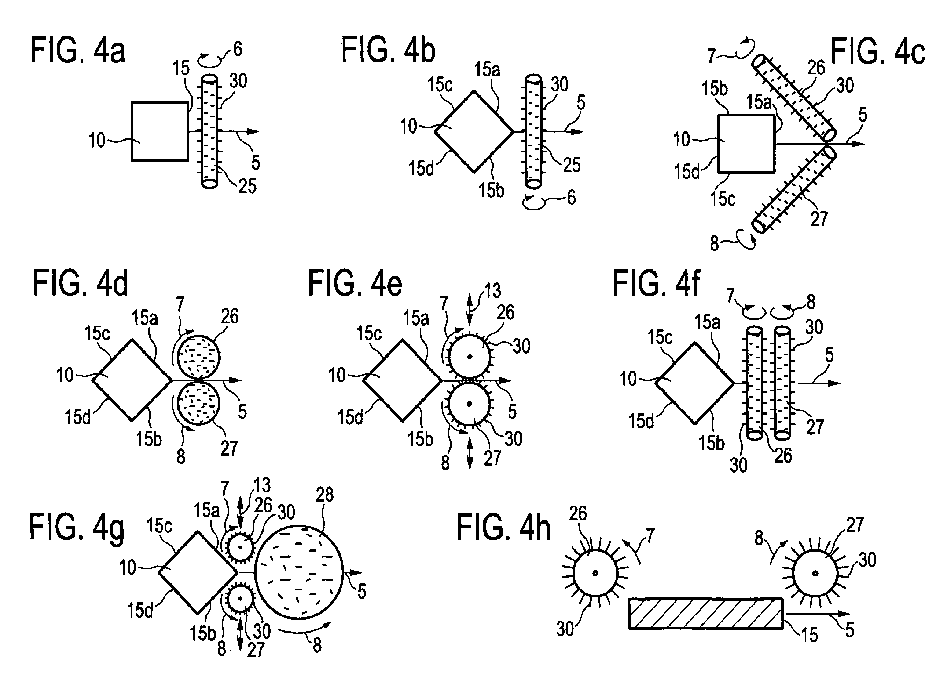

Die Figuren 4a bis 4m zeigen schematische Darstellungen zu Anordnungen der Reinigungsvorrichtungen mit Bürsten und Bürstenbesatz in Bezug auf Laufrichtung und Anordnungen der zu reinigenden Elektroden nach verschiedenen Ausführungsbeispielen.

Nach einem ersten Ausführungsbeispiel, das in der Fig. 4a gezeigt ist, kann eine Bürste 25 senkrecht zu einer Transportrichtung 5 der zu reinigenden Elektrode 10 und parallel zur einer Seitenfläche 15 dieser Elektrode 10 angeordnet sein, wobei sich die Bürste 25 in einer Drehrichtung 6 dreht, deren Drehachse sowohl zu der Seitenfläche 15 als auch zu einem in dieser Figur nicht gezeigten Transportband parallel ist, wobei der Bürstenbesatz 30 auf der Mantelfläche der Bürste 25 angeordnet ist. Mit der Anordnung des ersten Ausführungsbeispiels können besonders gut die Seitenfläche 15 und eine dieser Seitenfläche gegenüber liegende Seitenfläche als auch die obere Seite der Elektrode 10 gereinigt werden.

Nach einem zweiten Ausführungsbeispiel, das in der Fig. 4b gezeigt ist, kann die Bürste 25 senkrecht zu der Transportrichtung 5 der zu reinigenden Elektrode 10 angeordnet sein, wobei eine erste Seitenfläche 15a und eine zweite Seitenfläche 15b dieser Elektrode 10 unter einem Winkel von ungefähr 45° zu der Bürste 25 angeordnet sein kann und sich die Bürste 25 in der Drehrichtung 6 dreht, deren Drehachse sowohl unter dem Winkel von ungefähr 45° zu der ersten und der zweiten Seitenfläche 15a und 15b angeordnet ist als auch parallel zu einem in dieser Figur nicht gezeigten Transportband ist, wobei der Bürstenbesatz 30 auf der Mantelfläche der Bürste 25 angeordnet ist. Mit der Anordnung des zweiten Ausführungsbeispiels können besonders gut sowohl alle vier Seitenflächen 15a, 15b, 15c, 15d als auch die obere Seite der Elektrode 10 gereinigt werden.

Nach einem dritten Ausführungsbeispiel, das in der Fig. 4c gezeigt ist, können eine erste Bürste 26 und eine zweite Bürste 27 jeweils unter einem Winkel von ungefähr 45° zu der Transportrichtung 5 der zu reinigenden Elektrode 10 angeordnet sein, wobei die erste Seitenfläche 15a der Elektrode 10 senkrecht zu der Transportrichtung 5 und die zweite Seitenfläche 15b und eine dritte Seitenfläche 15c der Elektrode 10 jeweils parallel zu der Transportrichtung 5 angeordnet sein können und sich die erste Bürste 26 in einer Drehrichtung 7 und die zweite Bürste 27 in einer, vorzugsweise gegenläufigen Drehrichtung 8 drehen, deren Drehachsen sowohl jeweils ungefähr 45° zu der Transportrichtung 5 angeordnet als auch parallel zu einem in dieser Figur nicht gezeigten Transportband sind, wobei der Bürstenbesatz 30 jeweils auf den Mantelflächen der ersten Bürste 26 und der zweiten Bürste 27 angeordnet ist. Auch mit der Anordnung des dritten Ausführungsbeispiels können besonders gut sowohl alle vier Seitenflächen 15a, 15b, 15c, 15d als auch die obere Seite der Elektrode 10 gereinigt werden.

Nach einem vierten Ausführungsbeispiel, das in der Fig. 4d gezeigt ist, können die erste Bürste 26 und die zweite Bürste 27 jeweils senkrecht zu der Transportrichtung 5 der zu reinigenden Elektrode 10 und senkrecht zu einem in dieser Figur nicht gezeigten Transportband angeordnet sein, wobei die erste Seitenfläche 15a und die zweite Seitenfläche 15b der Elektrode 10 jeweils in einem Winkel von ungefähr 45° zu der Transportrichtung 5 angeordnet sind, und sich die erste Bürste 26 in einer Drehrichtung 7 und die zweite Bürste 27 in einer vorzugsweise gegenläufigen Drehrichtung 8 drehen, deren Drehachsen jeweils senkrecht zu einem in dieser Figur nicht gezeigten Transportband sind, wobei der Bürstenbesatz 30 jeweils auf den Grundflächen der ersten Bürste 26 und der zweiten Bürste 27 angeordnet ist. Auf diese Weise kann besonders gut die obere Seite der Elektrode 10 gereinigt werden.

Nach einem fünften Ausführungsbeispiel, das in der Fig. 4e gezeigt ist, können die erste Bürste 26 und die zweite Bürste 27 jeweils senkrecht zu der Transportrichtung 5 der zu reinigenden Elektrode 10 und senkrecht zu einem in dieser Figur nicht gezeigten Transportband angeordnet sein, wobei die erste Seitenfläche 15a und die zweite Seitenfläche 15b der Elektrode 10 jeweils in einem Winkel von ungefähr 45° zu der Transportrichtung 5 angeordnet sind, und sich die erste Bürste 26 in der Drehrichtung 7 und sich die zweite Bürste 27 in der vorzugsweise gegenläufigen Drehrichtung 8 drehen, deren Drehachsen jeweils senkrecht zu einem in dieser Figur nicht gezeigten Transportband sind, wobei der Bürstenbesatz 30 jeweils auf den Mantelflächen der ersten Bürste 26 und der zweiten Bürste 27 angeordnet ist und die erste Bürste 26 und die zweite Bürste 27 in einer zu der Transportportrichtung 5 im Wesentlichen senkrecht angeordneten Relativbewegungsrichtung 13 zueinander beweglich angeordnet sind. Durch die Relativbewegung 13 können alle vier Seitenflächen 15a, 15b, 15c und 15d besonders gut gereinigt werden.

Nach einem sechsten Ausführungsbeispiel, das in der Fig. 4f gezeigt ist, können die erste Bürste 26 und die zweite Bürste 27 senkrecht zu der Transportrichtung 5 der zu reinigenden Elektrode 10 angeordnet sein, wobei die erste Seitenfläche 15a und die zweite Seitenfläche 15b dieser Elektrode 10 unter einem Winkel von ungefähr 45° zu der ersten Bürste 26 und der zweiten Bürste 27 angeordnet sind und sich die erste Bürste 26 in der Drehrichtung 7 und sich die zweite Bürste 28 in der vorzugsweise gegenläufigen Drehrichtung 8 drehen, deren Drehachsen sowohl unter dem Winkel von ungefähr 45° zu der ersten und der zweiten Seitenfläche 15a und 15b angeordnet als auch parallel zu einem in dieser Figur nicht gezeigten Transportband sind, wobei der Bürstenbesatz 30 sowohl auf der Mantelfläche der ersten Bürste 26 als auch auf der Mantelfläche der zweiten Bürste 27 angeordnet ist. Durch die gegenläufigen Drehrichtungen 7 und 8 der ersten Bürste 26 und der zweiten Bürste 27 kann die Reinigung der Elektrode 10 verbessert werden.

Nach einem siebten Ausführungsbeispiel, das in der Fig. 4g gezeigt ist, können die erste Bürste 26 und die zweite Bürste 27 als auch eine dritte Bürste 28 jeweils senkrecht zu der Transportrichtung 5 der zu reinigenden Elektrode 10 und senkrecht zu einem in dieser Figur nicht gezeigten Transportband angeordnet sein, wobei die erste Seitenfläche 15a und die zweite Seitenfläche 15b der Elektrode 10 jeweils in einem Winkel von ungefähr 45° zu der Transportrichtung 5 angeordnet sind, und sich die erste Bürste 26 in der Drehrichtung 7 und die zweite Bürste 27 in der vorzugsweise gegenläufigen Drehrichtung 8 drehen, deren Drehachsen jeweils senkrecht zu einem in dieser Figur nicht gezeigten Transportband sind, wobei der Bürstenbesatz 30 jeweils auf den Mantelflächen der ersten Bürste 26 und der zweiten Bürste 27 angeordnet ist und die erste Bürste 26 und die zweite Bürste 27 in einer zu der Transportportrichtung 5 im Wesentlichen senkrecht angeordneten Relativbewegungsrichtung 13 zueinander beweglich angeordnet sind, wobei der Bürstenbesatz bei der dritten Bürste 28 auf deren Grundfläche angeordnet ist. Die Anordnung nach dem siebten Ausführungsbeispiel kombiniert die Vorteile der Anordnungen nach dem vierten und dem fünften Ausführungsbeispiel, so dass sowohl die vier Seitenflächen 15a, 15b, 15c, 15d als auch die obere Seite der Elektrode 10 besonders gut gereinigt werden können.

Nach einem achten Ausführungsbeispiel, das in der Fig. 4h gezeigt ist, können die erste Bürste 26 und die zweite Bürste 27 senkrecht zu der Transportrichtung 5 der zu reinigenden Elektrode 10 und parallel zur der Seitenfläche 15 der Elektrode 10 angeordnet sein, wobei sich die erste Bürste 26 in der Drehrichtung 7 und die zweite Bürste 27 in der vorzugsweise gegenläufigen Drehrichtung 8 drehen, deren Drehachsen sowohl zu der Seitenfläche 15 als auch zu einem in dieser Figur nicht gezeigten Transportband parallel sind, wobei der Bürstenbesatz 30 jeweils auf den Mantelflächen der ersten Bürste 26 und der zweiten Bürste 27 angeordnet ist. Dem sechsten Ausführungsbeispiel ähnlich kann bei dem achten Ausführungsbeispiel durch die gegenläufigen Drehrichtungen 7 und 8 der ersten Bürste 26 und der zweiten Bürste 27 die Reinigung der Elektrode 10 verbessert werden.

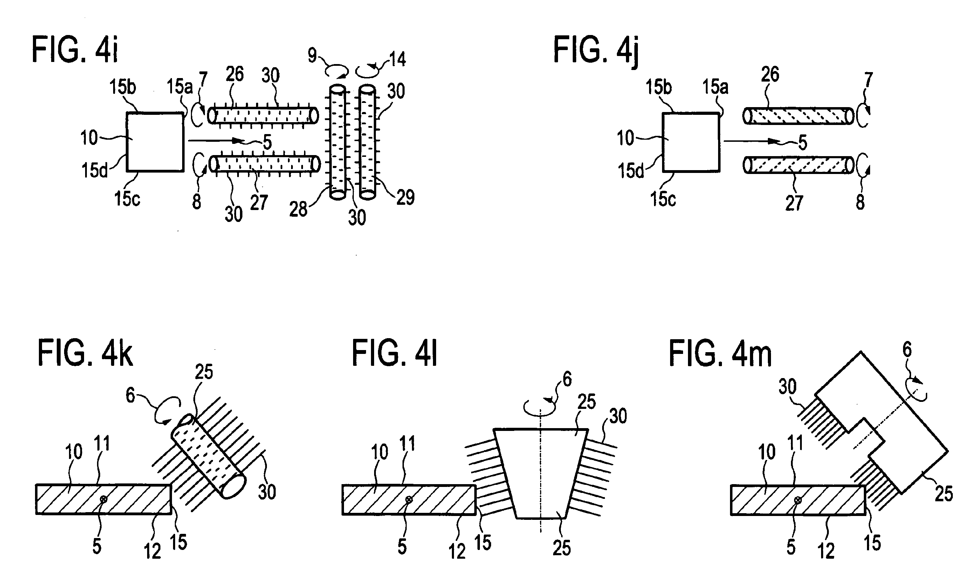

Nach einem neunten Ausführungsbeispiel, das in der Fig. 4i gezeigt ist, können die erste Bürste 26 und die zweite Bürste 27 parallel zu der Transportrichtung 5 der zu reinigenden Elektrode 10 und senkrecht zu der Seitenfläche 15 der Elektrode 10 angeordnet sein und können die dritte Bürste 28 und eine vierte Bürste 29 senkrecht zu der Transportrichtung 5 und parallel zu der Seitenfläche 15 der Elektrode 10 angeordnet sein, wobei sich die erste Bürste 26 in der Drehrichtung 7 und die zweite Bürste 27 in der vorzugsweise gegenläufigen Drehrichtung 8 drehen, deren Drehachsen senkrecht zu der Seitenfläche 15 und parallel zu einem in dieser Figur nicht gezeigten Transportband sind, wobei der Bürstenbesatz 30 jeweils auf den Mantelflächen der ersten Bürste 26 und der zweiten Bürste 27 angeordnet ist, und wobei sich die dritte Bürste 28 in der Drehrichtung 9 und die vierte Bürste 29 in einer vorzugsweise zur Drehrichtung 9 gegenläufigen Drehrichtung 14 drehen, deren Drehachsen sowohl zu der Seitenfläche 15 als auch zu dem in dieser Figur nicht gezeigten Transportband parallel sind, und wobei der Bürstenbesatz 30 jeweils auf den Mantelflächen der dritten Bürste 28 und der vierten Bürste 29 angeordnet ist. Mit der Anordnung des neunten Ausführungsbeispiels können sowohl die vier Seitenflächen 15a, 15b, 15c, 15d als auch die obere Seite der Elektrode 10 besonders gut gereinigt werden.

Nach einem zehnten Ausführungsbeispiel, das in der Fig. 4j gezeigt ist, können die erste Bürste 26 und die zweite Bürste 27 parallel zu der Transportrichtung 5 der zu reinigenden Elektrode 10 senkrecht zu der Seitenfläche 15 der Elektrode 10 angeordnet sein, wobei sich die erste Bürste 26 in der Drehrichtung 7 und die zweite Bürste 27 in der vorzugsweise gegenläufigen Drehrichtung 8 drehen, deren Drehachsen senkrecht zu der Seitenfläche 15 und parallel zu einem in dieser Figur nicht gezeigten Transportband sind, wobei der Bürstenbesatz 30 jeweils auf den Mantelflächen der ersten Bürste 26 und der zweiten Bürste 27 angeordnet ist. Darüber hinaus ist in dem zehnten Ausführungsbeispiel der Bürstenbesatz vorzugsweise schneckenförmig auf der ersten und der zweiten Bürste angeordnet, wodurch zusätzlich zu der Reinigung der Seitenfläche 15b, 15c auch der Transport der zu reinigenden Elektrode 10 unterstützt wird.

In der Fig. 4k ist ein elftes Ausführungsbeispiel gezeigt, bei dem die Bürste 25 mit der Drehrichtung 6 senkrecht zu der Transportrichtung 5 und in einem spitzen Winkel, vorzugsweise ungefähr 45° zu der Oberseite 11 und der Seitenfläche 15 der Elektrode 10 angeordnet ist, wobei der Bürstenbesatz 30 auf der Mantelfläche der Bürste 25 angeordnet ist. Diese Anordnung des elften Ausführungsbeispiels kann die Reinigung der Seitenfläche 15 und der oberen Seite der Elektrode 10 verbessern.

In der Fig. 4l ist ein zwölftes Ausführungsbeispiel gezeigt, bei dem die Bürste 25 mit der Drehrichtung 6 senkrecht zu der Transportrichtung 5 und parallel zu der Seitenfläche 15 der Elektrode 10 angeordnet ist, wobei der Bürstenbesatz 30 auf der Mantelfläche der Bürste 25 angeordnet ist und die Bürste 25 eine konische Ausgestaltung aufweist.

In der Fig. 4m ist ein dreizehntes Ausführungsbeispiel gezeigt, bei dem die Bürste 25 mit der Drehrichtung 6 senkrecht zu der Transportrichtung 5 und in einem spitzen Winkel, vorzugsweise ungefähr 45° zu der Oberseite 11 und der Seitenfläche 15 der Elektrode 10 angeordnet ist, wobei der Bürstenbesatz 30 vorzugsweise auf einem Kreisring am äußeren Umfang der Grundfläche der Bürste 25 "topfförmig" angeordnet ist.

### Bezugszeichenliste

- 1: erstes Transportband
- 2: zweites Transportband
- 3: drittes Transportband
- 4: Überwachungseinheit
- 5: Transportrichtung des Objekts
- 6: Drehrichtung einer Bürste
- 7: Drehrichtung einer ersten Bürste
- 8: Drehrichtung einer zweiten Bürste
- 9: Drehrichtung einer dritten Bürste
- 10: Objekt
- 11: erste Objektseite
- 12: zweite Objektseite
- 13: Relativbewegungsrichtung der ersten und zweiten Bürste
- 14: Drehrichtung einer vierten Bürste
- 15: zu reinigende Seitenfläche
- 15a: erste zu reinigende Seitenfläche
- 15b: zweite zu reinigende Seitenfläche
- 15c: dritte zu reinigende Seitenfläche
- 15d: vierte zu reinigende Seitenfläche
- 21: erste Reinigungsvorrichtung
- 22: zweite Reinigungsvorrichtung
- 25: Bürste
- 26: erste Bürste
- 27: zweite Bürste
- 28: dritte Bürste
- 29: vierte Bürste
- 30: Bürstenbesatz
- 50: Reinigungssystem

## Patentansprüche

1. Verfahren zur Reinigung von blatt- oder plattenförmigen Elektroden und/oder Separatoren (10) zum Aufbau eines Lithium oder ein anderes Alkalimetall auch in ionischer Form aufweisenden Elektrodenstapels eines elektrochemischen Energiespeichers oder von Teilen solcher Elektroden oder Separatoren, wobei die blatt- oder plattenförmigen Elektroden und/oder Separatoren (10) eine erste Objektseite (11) und eine der ersten Objektseite gegenüberliegende zweite Objektseite (12) und wenigstens eine die erste und die zweite Objektseite (11, 12) verbindende Seitenfläche aufweisen, wobei das Reinigungsverfahren die Schritte aufweist:
(S1) Anordnen wenigstens der Elektrode und/oder des Separators (10) auf einem ersten Transportband (1) derart, dass die zweite Objektseite (12) dem ersten Transportband (1) zugewandt ist;
(S2) Bewegen der Elektrode und/oder des Separators (10) mit dem ersten Transportband (1) zu einer ersten Reinigungsvorrichtung (21);
(S3) Reinigen der ersten Objektseite (11) und vorzugsweise wenigstens einer Seitenfläche der Elektrode und/oder des Separators (10) auf dem ersten Transportband (1) mittels der ersten Reinigungsvorrichtung (21);
(S4) Übergegeben der Elektrode und/oder des Separators (10) von dem ersten Transportband (1) auf ein zweites Transportband (2) derart, dass die erste Objektseite (11) dem zweiten Transportband (2) zugewandt ist;
(S5) Bewegen der Elektrode und/oder des Separators (10) mit dem zweiten Transportband (2) zu einer zweiten Reinigungsvorrichtung (22); und
(S6) Reinigen der zweiten Objektseite (11) und vorzugsweise wenigstens einer Seitenfläche der Elektrode und/oder des Separators (10) auf dem zweiten Transportband (2) mittels der zweiten Reinigungsvorrichtung (22).

2. Verfahren nach Anspruch 1, **dadurch gekennzeichnet, dass** die Elektrode und/oder der Separator (10) derart auf dem ersten und/oder dem zweiten Transportband (1, 2) angeordnet werden, dass wenigstens eine Seitenfläche der Elektrode und/oder des Separators (10) in einem von 0 Grad und von 90 Grad verschiedenen Winkel, vorzugsweise in einem Winkel im Bereich von etwa 30 bis 45 Grad, relativ zur Laufrichtung des ersten bzw. zweiten Transportbandes (1, 2) ausgerichtet ist.

3. Verfahren nach Anspruch 1 oder 2, **dadurch gekennzeichnet, dass** in Schritt (S3) und/oder in Schritt (S6) die Elektrode und/oder der Separator (10) in einem Durchlaufverfahren gereinigt werden.

4. Verfahren nach einem der Ansprüche 1 bis 3, **dadurch gekennzeichnet, dass** die erste Reinigungsvorrichtung eine erste Bürstenvorrichtung aufweist und/oder dass die zweite Reinigungsvorrichtung eine zweite Bürstenvorrichtung aufweist und insbesondere dass in Schritt (S3) und/oder in Schritt (S6) die Elektrode und/oder der Separator (10) auf dem ersten bzw. zweiten Transportband (1, 2) mit wenigstens einer sich drehenden Bürste zum Lösen anhaftender Partikel abgebürstet werden.

5. Verfahren nach einem der Ansprüche 1 bis 4, **dadurch gekennzeichnet, dass** in Schritt (S3) und/oder in Schritt (S6) Partikel von dem Objekt (10) auf dem ersten bzw. zweiten Transportband (1, 2) mittels Ultraschallpulsen gelöst werden und/oder dass in Schritt (S3) und/oder in Schritt (S6) die von dem Objekt (10) gelösten Partikel mittels eines Luftstroms fortgeführt werden.

6. Verfahren nach einem der vorhergehenden Ansprüche, **dadurch gekennzeichnet, dass** die Elektrode und/oder der Separator (10) auf dem ersten Transportband (1) und/oder auf dem zweiten Transportband (2) elektrostatisch entladen werden.

7. Verfahren nach einem der vorhergehenden Ansprüche, **dadurch gekennzeichnet, dass** die Elektrode und/oder der Separator (10) nach dem Schritt (S6) in einem Schritt (S7) von dem zweiten Transportband (2) auf ein drittes Transportband (3) übergeben werden, wobei die zweite Objektseite (12) dem dritten Transportband (3) zugewandt ist.

8. Verfahren nach einem der vorhergehenden Ansprüche, **dadurch gekennzeichnet, dass** die Elektrode und/oder der Separator (10) in Schritt (S4) und/oder in Schritt (S7) mit gleichbleibender Ausrichtung relativ zur Laufrichtung des ersten bzw. des zweiten Transportbandes (1, 2) übergeben werden.

## Claims

1. A method for cleaning sheet-like or plate-like electrodes and/or separators (10) for assembling an electrode stack of an electrochemical energy storage device comprising lithium or another alkali metal, including in ionic form, or parts of such electrodes or separators, wherein the sheet-like or plate-like electrodes and/or separators (10) have a first object side (11) and a second object side (12) opposite said first object side and at least one side surface connecting the first and the second object sides (11, 12), wherein the cleaning method comprises the steps of:
(S1) arranging at least the electrode and/or the separator (10) on a first conveyor belt (1) such that the second object side (12) faces the first conveyor belt (1);
(S2) the first conveyor belt (1) moving the electrode and/or the separator (10) to a first cleaning apparatus (21);
(S3) the first cleaning apparatus (21) cleaning the first object side (11) and preferably at least one side surface of the electrode and/or separator (10) on the first conveyor belt (1);
(S4) transferring the electrode and/or separator (10) from the first conveyor belt (1) to a second conveyor belt (2) such that the first object side (11) faces the second conveyor belt (2);
(S5) the second conveyor belt (2) moving the electrode and/or the separator (10) to a second cleaning apparatus (22); and
(S6) the second cleaning apparatus (22) cleaning the second object side (12) and preferably at least one side surface of the electrode and/or the separator (10) on the second conveyor belt (2).

2. The method according to claim 1, **characterized in that** the electrode and/or the separator (10) is arranged on the first and/or the second conveyor belt (1, 2) such that at least one side surface of the electrode and/or separator (10) is aligned at an angle other than 0° or 90°, preferably at an angle ranging from about 30° to 45°, relative to the direction of travel of the first or second conveyor belt (1, 2).

3. The method according to claim 1 or 2, **characterized in that** the electrode and/or the separator (10) is cleaned in step (S3) and/or step (S6) in a continuous process.

4. The method according to any one of claims 1 to 3, **characterized in that** the first cleaning apparatus comprises a first brush apparatus and/or that the second cleaning apparatus comprises a second brush apparatus and particularly that at least one rotating brush brushes the electrode and/or the separator (10) on the first or second conveyor belt (1, 2) in step (S3) and/or step (S6) so as to dislodge adhered particles.

5. The method according to any one of claims 1 to 4, **characterized in that** particles from the object (10) on the first or second conveyor belt (1 , 2) are dislodged by means of ultrasonic pulses in step (S3) and/or step (S6), and/or that the particles dislodged from the object (10) are conducted away by a flow of air in step (S3) and/or step (S6).

6. The method according to any one of the preceding claims, **characterized in that** the electrode and/or the separator (10) is electrostatically discharged on the first conveyor belt (1) and/or on the second conveyor belt (2).

7. The method according to any one of the preceding claims, **characterized in that** subsequent step (S6), the electrode and/or the separator (10) is transferred from the second conveyor belt (2) to a third conveyor belt (3) in a step (S7), wherein the second object side (12) faces said third conveyor belt (3).

8. The method according to any one of the preceding claims, **characterized in that** the electrode and/or the separator (10) is transferred in step (S4) and/or step (S7) at a constant orientation relative to the direction of travel of the first or the second conveyor belt (1, 2).

## Revendications

1. Procédé servant à nettoyer des électrodes présentant une forme de lame ou une forme de plaque et/ou des séparateurs (10) servant à produire un empilement d'électrodes, présentant du lithium ou un autre métal alcalin également sous une forme ionique, d'un accumulateur d'énergie électrochimique ou servant à nettoyer des parties d'électrodes ou de séparateurs de ce type, sachant que les électrodes présentant une forme de lame ou de plaque et/ou les séparateurs (10) présentent un premier côté d'objet (11) et un deuxième côté d'objet (12) opposé au premier côté d'objet et au moins une surface latérale reliant le premier et le deuxième côté d'objet (11, 12), sachant que le procédé de nettoyage comprend les étapes qui suivent consistant à :
(S1) disposer au moins l'électrode et/ou le séparateur (10) sur une première bande transporteuse (1) de telle manière que le deuxième côté d'objet (12) est tourné vers la première bande transporteuse (1) ;
(S2) déplacer l'électrode et/ou le séparateur (10) à l'aide de la première bande transporteuse (1) en direction d'un premier dispositif de nettoyage (21) ;
(S3) nettoyer le premier côté d'objet (11) et de préférence au moins une face latérale de l'électrode et/ou du séparateur (10) sur la première bande transporteuse (1) au moyen du premier dispositif de nettoyage (21) ;
(S4) transférer l'électrode et/ou le séparateur (10) de la première bande transporteuse (1) sur une deuxième bande transporteuse (2) de telle manière que le premier côté d'objet (11) est tourné vers la deuxième bande transporteuse (2) ;
(S5) déplacer l'électrode et/ou le séparateur (10) à l'aide de la deuxième bande transporteuse (2) en direction d'un deuxième dispositif de nettoyage (22) ; et
(S6) nettoyer le deuxième côté d'objet (11) et de préférence au moins une face latérale de l'électrode et/ou du séparateur (10) sur la deuxième bande transporteuse (2) au moyen du deuxième dispositif de nettoyage (22).

2. Procédé selon la revendication 1, **caractérisé en ce que** l'électrode et/ou le séparateur (10) sont disposés sur la première et/ou la deuxième bande transporteuse (1, 2) de telle manière qu'au moins une face latérale de l'électrode et/ou du séparateur (10) est orientée selon un angle autre qu'un angle de 0 degré et de 90 degrés, de préférence selon un angle compris dans la plage allant de 30 à 45 degrés, par rapport au sens de déplacement de la première ou de la deuxième bande transporteuse (1, 2).

3. Procédé selon la revendication 1 ou 2, **caractérisé en ce que** l'électrode et/ou le séparateur (10) sont nettoyés selon un procédé de passage en continu à l'étape (S3) et/ou à l'étape (S6).

4. Procédé selon l'une quelconque des revendications 1 à 3, **caractérisé en ce que** le premier dispositif de nettoyage présente un premier dispositif à brosse, et/ou **en ce que** le deuxième dispositif de nettoyage présente un deuxième dispositif à brosse, et en particulier **en ce que** l'électrode et/ou le séparateur (10) sont balayés sur la première ou la deuxième bande transporteuse (1, 2) à l'étape (S3) et/ou à l'étape (S6) avec au moins une brosse amenée en rotation afin de détacher les particules agglomérées.

5. Procédé selon l'une quelconque des revendications 1 à 4, **caractérisé en ce que** des particules sont détachées de l'objet (10), à l'étape (S3) et/ou à l'étape (S6), sur la première ou la deuxième bande transporteuse (1, 2) au moyen d'impulsions à ultrasons, et/ou **en ce que** les particules détachées de l'objet (10) sont transportées au moyen d'un flux d'air à l'étape (S3) et/ou à l'étape (S6).

6. Procédé selon l'une quelconque des revendications précédentes, **caractérisé en ce que** l'électrode et/ou le séparateur (10) sont déchargés de manière électrostatique sur la première bande transporteuse (1) et/ou sur la deuxième bande transporteuse (2).

7. Procédé selon l'une quelconque des revendications précédentes, **caractérisé en ce que** l'électrode et/ou le séparateur (10) sont transférés après l'étape (S6) lors d'une étape (S7) de la deuxième bande transporteuse (2) sur une troisième bande transporteuse (3), sachant que le deuxième côté d'objet (12) est tourné vers la troisième bande transporteuse (3).

8. Procédé selon l'une quelconque des revendications précédentes, **caractérisé en ce que** l'électrode et/ou le séparateur (10) sont transférés, à l'étape (S4) et/ou à l'étape (S7), selon une orientation constante par rapport au sens de déplacement de la première ou de la deuxième bande transporteuse (1, 2).
